# EUROPEAN PATENT APPLICATION

(11) **EP 3 715 481 A1**
(43) Date of publication of application: **30.09.2020**
(21) Application number: 18827508.5
(22) Date of filing: 05.09.2018
(51) Int. Cl.: C22B 1/00, C22B 1/16, C22B 3/00, C22B 3/04, C22B 3/06, C22B 3/08, C22B 11/06, C22B 11/08, C22B 15/00

(54) **METHOD FOR EXTRACTING BASE AND PRECIOUS METALS BY A PRE-TREATMENT THAT LEADS TO SOLUBILISATION OF THE REFRACTORY MATRICES THEREOF**

(30) Priority: 05.07.2017 CL 20171777
(71) Applicant: Patiño Martinez, Eduardo Luis, San Pedro de la Paz, Concepción C.P. 4130000 (CL)
(72) Inventor: Patiño Martinez, Eduardo Luis, San Pedro de la Paz, Concepción C.P. 4130000 (CL)
(74) Representative: Ballester Cañizares, Rosalia
(86) International application number: PCT/CL2018/000028
(87) International publication number: WO 2019/006568

(57) **Abstract**

The present invention relates to a method for extracting base and precious metals, all contained in refractory minerals, using aqueous media. The aim is to replace the current "flotation/smelting" · method for extracting minerals in Chilean and global mining or classical leaching with a method comprising a simple and robust pre-treatment that leads to solubilisation of the refractory matrices thereof. The method consists of mixing the mineral (Cu2S, CuS,CuFeS2, Cu5FeS4, FeS2, FeAsS.NiS, (Ni,Fe)xSy), ground to an appropriate size (2.5 centimetres), with a specific dose of solid reagent in a rotary agglomeration drum and then adding slightly acidified water to obtain a defined water content (5-8%) depending on the type of gangue contained in the metal-containing solid, thereby forming an agglomerate that will form a heap, which is subsequently allowed to stand for a period of several days (20-60 days), during which the conditions required to transform the refractory matrix into a highly soluble solid will be generated. Finally, appropriately regulated irrigation is applied, thus resulting in extraction of the metal by simple aqueous washing. In essence, the method achieves maximum transformation of the original refractory mineral into a highly soluble solid salt during a step prior to the conventional leaching process. Thus, the metal will be contained in a solid with a much higher solubility than the original matrix, therefore the dissolution thereof will be faster, more efficient and require a minimal use of consumables and reagents.

## Description

This application relates to a method of extracting base metals such as copper, zinc, lead, molybdenum, iron; and precious metals such as gold, silver, platinum; all contained in refractory minerals, concentrates, tailings, rubble and urban waste, using a simple and robust pre-treatment consisting of mixing the crushed ore (Cu2s, CuS, CuFeS2, Cu5FeS4, Cu3AsS4, FeS2, FeAsS, NiAs, (Ni, Fe)xSy), duly particulated (2.5 to 5 centimeters), with a certain dose of solid reagent inside a rotating agglomerator drum (standard in mining operations), to later add slightly acidic water obtaining a defined humidity (5-8%), forming a glomer that will give rise to a pile (agglomeration stage), remaining then in rest for short periods of time (20-60 days), to finally provide irrigation, properly regulated, thus obtaining the extraction of the metal by simple watery washing.

### PRIOR ART

In Chilean mining, the only historic and quintessential method of mineral extraction has been leaching. By definition, the technical problem presented by the conventional leaching process is basically related to the requirement of high doses of chemical reagents, long times needed to finally obtain the extraction of the mineral for the process, product of the development of all its stages (flotation - melting), and the high environmental impact that all the leaching process chronology implies (detonations, crushing, use of reagents, concentrators, use of water, energy, etc.)

Initially, thin layer heap leaching to TL (Thinlayer) was a technological development led by Sociedad Minera Pudahuel, a pioneer in the country. Although it had its origin in a concept patented in the USA in the second half of the 1970s, it was perfected by this company from its original definition in the laboratory until it was taken to an industrial application in 1980. These refinements also led to a patented invention, registered first in Chile (Intellectual Property Registry No. 32,025 "Procedure for leaching in rumas to layers of mixed oxide and sulphide copper ores") and then in some other countries. In addition, Sociedad Minera Pudahuel developed the bacterial leaching technology in thin layer piles or BTLs through a systematic research aimed to know the bacteria-assisted leaching mechanisms. The results, in short, consisted basically of management models for the optimisation of sulphide mineral leaching processes, thus considerably broadening the spectrum of minerals suitable for economic leaching.

In 1971, Mantos Blancos Mining Company, in its patent registration No. 25,930, exhibited its "Improvements in the leaching of mixed minerals of oxides and sulfides of copper and other metals using chlorine and oxidized compounds of it, at temperatures between room and 50 °C".

Deleew Schmitz Partnerschip in 1979, in his patent registration No. 30,914, reported his "Procedure for the recovery of copper and silver from sulphide concentrates by leaching with oxygen and ferrous chloride".

In 1981 the company E I DU PONT DE NEMOURS AND COMPANY, in its patent registration No. 32,426, noted its "Procedure for the recovery of copper from sulfide ore concentrates by leaching with nitric and sulfuric acid to produce a solution containing copper and iron ions supplemented with electrodeposition of copper after reducing ferric nitrate ions and other impurities to obtain high purity copper".

Degussa Aktiengesellschafe, in the patent registration No. 38,554 of 1993, coined its Process for leaching concentrated ore or gold and silver waste by cyanide leaching supported by hydrogen peroxide and maganese compounds as catalysts for the decomposition of such peroxide".

And finally, for the purpose of this text, Minnesota Mining and Manufacturing Company, in its patent registration NO 39,510 of 1998, specified its "Method of gold and silver recovery by leaching with an aqueous solution containing certain fluoro-aliphatic and polymeric surfactants".

At an international level, we can highlight patents US7722756132 of 2010 "Process for multiple stage direct electrowinning of Cooper" which relates to a process for the direct electrolytic extraction stage of multiple copper; patent US7736488132 "Process for recovery of Cooper from copper-bearing material using pressure leaching, direct electrowinning and solvent/solution extraction" which relates to a procedure for the recovery of copper from copper-containing material by pressure leaching and direct electrolytic extraction and solvent/solution extraction; and finally the 2011 patent US8070851 32 "Chloride heap leaching" which relates to a heap leaching method for recovering copper from primary copper sulphide ore in which the ore is leached into an acid chloride/sulphate solution in the presence of requirements with the potential of the ore's surface pair below 600 mv to cause the sulphide to dissolve into copper.

After these inventions, the dynamic in the activity of mineral extraction in Chile and the world has always been leaching, although at the end of the twentieth century and beginning of this one, new concepts have appear, that are always related to this one, for example the biolixiviation (by means of bacteria), the leaching of sulfurated minerals with sodium chloride, sauna leaching, etc. However, the method proposed by the present invention is transversal, that is to say, it is optimal for the extraction of a series of metals contained in complex minerals; to un-capsulate and dissolve precious metals contained in refractory matrices and even rare earths. Its industrial application is perfectly feasible in Chilean and world mining, since its establishment does not imply onerous investments (it is possible to use it in existing copper concentrator sites); the inputs it requires (solid reagents, water and energy) are very low cost and necessary in lower doses; it is important to maximize the final recovery of the metal from 10 to 30%; higher extraction kinetics, that is, from 50 to 100%; lower unit cost of operation; it minimizes the classic leaching cycle between 30 and 50% with higher pad availability; optimizes the availability of inventories; increases the valorization of the mining resource; increases the throughput; constitutes itself as a new equilibrium point of operational parameters; requires low doses of reagents (reduces its net consumption from 30 to 50%); reduces the water requirements between 15 to 30% and the energy requirements between 30 and 70%, as well as the physical/(bio)chemical transport resistances and the number of chemical reaction stages to well, rightly, ELIMINATES the classic concept of LIXIVIATION.

Copper hydrometallurgy corresponds to the methodology followed to process oxidized copper ores (oxides) and some species of sulfides. Through different physical and chemical reactions, copper is extracted from the crushed ore, dissolved in an acid solution (leaching stage) and then continued to a stage of solvent extraction and then electro-winning, producing high purity copper cathodes. In this scenario, in recent years the industry has not incorporated new leachable deposits into its resource base. Similarly, project portfolios and future development plans of mining companies are strongly based on the exploitation of mines already in operation (Brawnfield projects), where further deepening of their deposits will lead to the depletion of oxidized minerals. The above, added to the deterioration in the quality of the ore, both in terms of grades and leachability characteristics, leads to recent estimates for 2026 that only 12% of the expected copper production will correspond to electro-winning cathodes, generating a significant idle capacity in the electrowinning plants.

In the next few years, the development of the national mining industry will be based on the exploitation of sulphide mineral reserves (mainly chalcopyrite), for which, at present, mineral concentration processes are used. However, in this future scenario, hydrometallurgy will also have to address the treatment of sulphide minerals. Hydrometallurgy is not very competitive in comparison with concentration, since the former allows a recovery of more than 90% in a matter of hours and the latter reaches between 35% and 60% recovery in periods longer than 300 days. In this sense, it is clear that it is crucial for hydrometallurgy to have technologies that allow for increased efficiency in relation to recovery time. Precisely because of the above, the method proposed by the present invention is a new and alternative technology to the classic one in terms of metal extraction from the point of view of recovery time, low operating costs (solid reagents, water, energy) and its greater empathy with the environment.

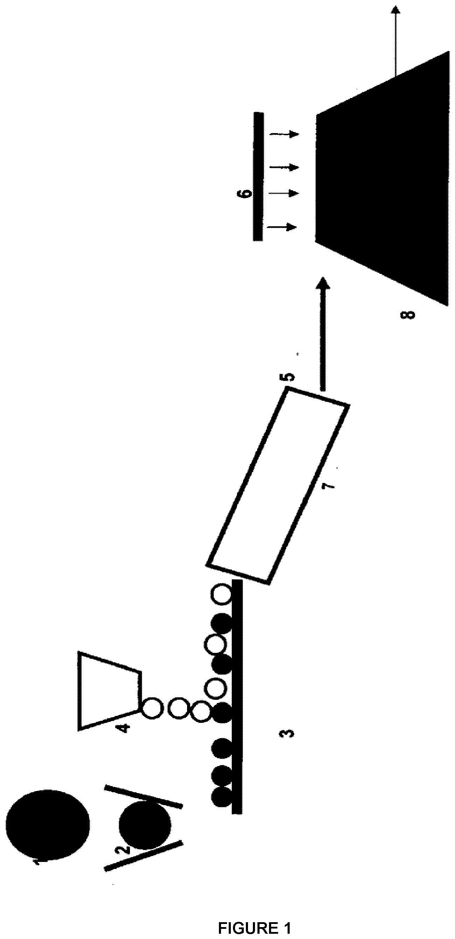

### BRIEF DESCRIPTION OF THE FIGURE

The figure represents the flow chart of the pre-treatment using the method for extracting the metal later by aqueous media. It begins with the crushed ore and then passes to a conveyor belt, in which it receives doses of solid reagents from an upper hopper mixed in a drum agglomerator ratatars, receiving a slight dose of water thus acquiring a very low share of moisture to finally give rise to a pile glomerator which is the one that will receive rest for days, and finally for aqueous media extract the metal.

### DETAILED DESCRIPTION OF THE INVENTION

Reference is always made in this text, as a descriptive example, to copper ores such as chalcocite, coveline, enargite, bornite, chalcopyrite, and gold ores contained in sulphide matrices (e.g. gold encapsulated in pyrite or arsenopyrite). On the other hand, the concept of refractory matrix will refer to a solid containing the metal that is very difficult to destroy by conventional leaching methods.

Basic concepts of the invention to method:
1. The invention is based or grounded on the fundamental identification that the electron is a quantum particle, so its transport mechanism is totally different from that of an ion used in conventional leaching mechanisms. An electron is made transparent by two specific mechanisms: tunneling and stretching. Par 10 itself, the invention is based on the integration of three properties:
   a) A semiconductor to insulator material (dicalcogenic materials, such as sulfur) which possesses a very high gap between the valence band and the conduction band of its molecular orbits.
   b) The transformation of these refractory materials into non-refractory matrices (i.e. very soluble matrices) requires minimizing this gap between the valence bands; and,
   (c) Electronic transport by stretching and digging, to solubilise the refractory matrix, is stimulated by excitation.
2. The invention provides a method for achieving maximum transformation of the original refractory mineral into a highly soluble solid salt, during a stage prior to the conventional leaching process. In that way, the metal will be contained in a solid of high solubility compared to the original matrix and, therefore, its dissolution will be faster, more efficient and will require a minimum of inputs and reagents, that is, it will only need a washing stage, in the following way:
   a) The mineral (Cu2S, CuS, CuFeS2, Cu5FeS4, Cu3AsS4, FeS2, FeAsS, NiAs, (Ni, Fe) xSy), which is duly particulated (2.5 to 5 centimeters), is brought into intimate contact with a given quantity of specific solid agent (depending on the mineral, between 3 and 12 kilograms per ton of it), in the agglomeration stage, prior to leaching (2) (3) (4) (5) (6).
   b) The agglomeration is made to a range of humidification between 5 - 8%, depending on the type of gangue that has the solid that contains the metal. The agglomeration solution can be the same refining that is generated in the SX- EW process.
   c) The agglomerate thus formed (7), is left to rest for a period ranging from 20 to 60 days. During this period, conditions are generated to transform the refractory matrix into a very soluble solid that will contain the metal to be extracted.
   (d) At this point, the metal is extracted by simple washing (8).
   (e) Since the solid agent used in the agglomeration stage is not a chemical reagent, it can be broken down from the washing solutions, to prevent any ionic charge effect.
3. Since the objective is focused on delivering a real alternative to replace the conventional flotation-melting process, the invention will refer as a baseline to the conventional leaching process. The heap leaching process will be taken as the reference because it is the simplest to operate and has the lowest investment and operating costs.
4. A conventional heap leach process consists of 4 stages:
   Crushing - Agglomeration - Leaching - Solvent extraction - Electroplating
5. The radical difference between the conventional process and the invention lies in the agglomeration stage. To explain it, a copper sulphide ore will be taken as an example.
   In a conventional process, the agglomeration stage consists of mixing the mineral with solutions until it reaches a humidity of 7 - 8%. In this case, the agglomeration solutions contain the chemical reagents and are left to stand for a few days. During this resting period, the chemical reaction occurs at very low levels, no more than 20%, so that the rest of the mineral, which is still as sulphide, remains refractory and therefore it is imperative to continue with a heap leaching process, which requires very long cycles of time (8 -12 months and more).
   On the other hand, using the method of the present invention, the agglomeration is carried out by mixing the mineral with a solid agent and acid solution (6), allowing it to rest. The period of rest is fundamental, since it is in this stage where the maximum transformation of the sulfur to a soluble solid is achieved, which later will only require a washing in slightly acidic solutions, reaching transformations of up to 70%, in very short times (20 - 40 days). Strictly speaking, the concept of leaching is dispensed with, and high levels of extraction are achieved in very short cycles.
6. The method includes the definition of both the size of the ore (2.5 to 5 centimeters) and the size of the active solid agent (3 to 12 kg per ton of ore) in order to generate the right conditions for optimal electron transport.
7. The solid active agents are varied depending on the origin of the refractory matrix that needs to be solubilized: a) They can be solid salts such as NaCl, NaN03, MgCl2, KCl, Phosphates, Oxalates, Urates; b) Mix ore and solid active agent, before the wetting stage at environmental conditions; c) The wetting solutions in this agglomeration stage can even be the refining solution that circulates in the hydrometallurgical process (5), that is, solutions with a sulfuric acid content (10 to 12 gpl) and pH less than 2.5.
8. Once the resting period is over, the aqueous extraction of the valuable metal is carried out by means of drip irrigation. Irrigation must be continuous, at a moderate flow rate and is carried out in pairs, expressed in units of litre/square metre per hour = 4. This means that in each square metre that is kept watering for an hour, 4 litres of water are being added, all until so much metal has been removed from the pile that it has solubilised in the resting period. In this first stage, the amount of metal solubilized in the rest period is extracted i.e. 70% and is done in elbow periods, because the dissolution kinetics of
   - a soluble salt is much lower than the dissolution kinetics of a sulphur.

   If, after washing, the mineral residue is still insoluble, continuous watering must be used, but at a rate equal to half the flow rate used in the first stage. This last stage will be more and more coda, as long as maximum solubilization levels are achieved in the resting stage. Now, finally, given the essence of the method, even seawater can be used in the agglomeration and irrigation.
9. The method of the present invention can be repeated as many times as needed to achieve the most optimal extractions, depending on the type of matrix and the desired economic-financial objective. That is, after the first washing of the par glomer, the pile is allowed to drain. Once drained, it is re-wetted with highly concentrated solutions (>50 gpl) of the same reagent used in the first stage and another more intense one. The rewetting of the battery must be carried out at a very low rate: 2 to 3 llm2xh, thus ensuring that the rewetting solution does not dislodge the battery. It is left to rest for 10 to 20 days so that the glomers dry out and secondary reactions of solubilization of the remaining refractory matrix are generated and finally, it is irrigated again to proceed with the extraction of the complementary part of the valuable metal.
10. The solution containing the released metal also includes iron and many other dissolved species of the ore and, depending on the solid agent used, the solutions resulting from the process may contain high levels of chloride-comma jones. On the other hand, when using a comma-irrigation method, the resulting flow will be lower compared to that obtained in the conventional process and therefore one less train will be required in the solvent extraction stage. Thus, the remaining SX train is adapted to use the CI washing stage from the organic.

### METHOD OF THE INVENTION APPLIED TO THE EXTRACTION OF GOLD

Gold can be found geologically in two ways:
TYPE I MINERAL: Particles of free gold in oxidized matrices.
TYPE II MINERAL: Particles of 010 encapsulated in sulphide granules which may be pyrite, arsenopyrite or other sulphides, which are contained in silicate matrices.

In the case of free gold particles in oxidized matrices, leaching with cyanide solutions in piles is the most standardized and used process. Metallic gold is obtained by applying the Merrill Crowe process. The method of the invention, considers agglomeration with solid cyanide, in the stage previous to the leaching, to accelerate drastically the solubilization of the gold, in such a way to diminish drastically the cycle of the process and to increase the recovery of this one.

In the case of the ring particles encapsulated in grains of sulfides that can be pyrite, arsenopyrite or other sulfides, contained in silicate matrices, et cyanide cannot attack the grains of sulfides and therefore, cannot dissolve et gold, therefore there are three technologies considered conventional:
1. Reducing the ore to micras size, using crushers, ball mills and SAG, then float concentrate pyrite/arsenopyrite, and then melt the concentrate to obtain gold ingots. A process with high investment and operating costs.
2. Reducing ore to the size of bushes, using crushers, ball mills and SAG, then concentrate by flotation the pyrite/arsenopyrite, and later said concentrate is leached using high pressure titanium reactors to finally obtain gold by means of the Merrill Crawe process. It is also a very expensive process in investment and operation. A variant is to bio-leach the concentrate to destroy the pyrite, then it is washed, and a second leaching is done with cyanide. All of it, in mechanically agitated tanks. This is a process known as BIOX comma. Even so, it is still a high investment process.
3. Reducing the mineral to inch size, using crushers, is bacterially leached into piles so that the microorganisms destroy the pyrite matrix, then the pile is washed, and a conventional cyanidation process is started (equivalent to that applied to type 1 mineral). It is a process that invests a lot of time, excess of fresh water and it is also of low efficiency.

For the free gold particles in oxidized matrices or type I minerals, the method of the invention considers three alternatives that consist in agglomerating the mineral with solid cyanide and/or sodium chloride, in the stage prior to leaching, in order to drastically and simultaneously accelerate three aspects of the process:
a) To achieve the total or partial dissolution of the pyrite, to allow the reagents to agree to attack the gold;
b) To achieve a high solubilization of the gold, of such way to drastically decrease the process cycle and increase process recovery; and,
c) In this case, irrigation refers practically to a mere washing stage, avoiding or drastically minimizing the concept of leaching.

### MINERAL TYPE I (Free gold particles in oxidized matrices):

In the method of the invention, applied to mineral type I, NaCN or NaCl can be used and it consists of the following stages:
a) ALTERNATIVE 1 (Using NaCN)
   - CHANGING: The mineral is reduced to a size of 2.5 centimeters (if the oxidized mineral contains a lot of clay, the size reduction should be done to 5 centimeters)
   - AGGROMERATION: Before entering the agglomerator drum.
   - Solid lime is added directly from a hopper N 0 1 to the conveyor belt. The lime comes in powder form and is added between 0.5 and 5 k/ton, depending on the purity of the lime to ensure a basic pH > 11 when watering begins.
   - Immediately afterwards the solid NaGN reagent is added directly to the same conveyor belt from an N02 Hopper.
   - The dosage will be between 1 - 2 kg of NaCN per ton of ore. The NaCN should be granulated to size between 0.3 - 0.9 cm.
   - REST: At the exit of the drum, the formed glomer is transported to the leaching pad. The glomer must rest between 5 and 10 days.
   - IRRIGATION: Once the resting period is over, the pile is watered with refining solutions to extract the gold in cyanide water solution.
b) ALTERNATIVE 2 (Using NaCI)
   - CHANGING: The mineral is reduced to a size of 2.5 centimeters (if the oxidized mineral contains a lot of clay, the size reduction should be done to 5 centimeters)
   - AGGROMERATION: Before entering the agglomerator drum.
   - Solid lime is added directly from a hopper N 0 1 to the conveyor belt. The lime comes in powder form and is added between 0.5 and 5 k/ton, depending on the purity of the lime to ensure a basic pH > 11 when watering begins.
   - Immediately afterwards the solid NaCl reagent is added directly to the same conveyor belt from an N02 Hopper.
   - The dosage will be between 2 - 3 kg of NaCl per ton of ore. The NaCl should be granulated to size between 0.9 - 0.6 cm.
   - That way the conveyor belt contains ore, lime and NaCl reagent.
   - When entering the agglomerator drum, a perfect mixture of the solid reagents is achieved. Refining solutions are added to the interior of the agglomerator drum to achieve the determined degree of wetting.
   - REST: At the exit of the drum, the glomerates formed are transported to the leaching pad. The glomerator must rest for a period of 10 to 15 days.
   - IRRIGATION: Once the resting period is over, the pile is watered with refining solutions to extract the gold in aqueous chloride solution.

### MINERAL TYPE II (Gold particles encapsulated in sulphide grains that may be pyrite, arsenopyrite or other sulphides, contained in silicate matrices):

The method of the invention applied to type II mineral can be applied in 3 alternatives and consists of the following stages:

### a) ALTERNATIVE 1 (Using NaCI)

It consists of using a single solid reagent only for both effects: to disencapsulate the gold trapped in the pyrite/arsenopyrite grains and simultaneously to solubilize the 010. The procedure is as follows:
- SPLITTING: The ore is reduced to a size of 2.5 centimeters (if the oxidized ore contains a lot of clay, the size reduction should be done to 5 centimeters)
- AGGROMERATION: Before entering the agglomerator drum.
- Solid lime is added directly from a #1 hopper to the conveyor belt. The lime comes in powder form and is added between 0.5 and 5 k/ton, depending on the purity of the lime to ensure a basic pH > 11 when watering begins.
- Immediately afterwards the solid NaCl reagent is added, directly to the same conveyor belt from a N02 Hopper.
- The dosage should be between 5 - 10 kg of NaCl per ton of ore. The NaCl should be granulated to size between 0.9 - 0.6 cm.
- That way the conveyor belt contains ore, lime and NaCl reagent. -When entering the agglomerator drum a perfect mixture of the solid reagents is achieved. Refining solutions are added to the interior of the agglomerator drum to reach the determined degree of wetting.
- REST: At the exit of the drum, the glomerator formed is transported to the leaching pad. The glomerator must rest for 20 to 30 days. During this period the reagent transforms the pyrite into a porous mineral and solubilizes the gold.
- IRRIGATION: Once the resting period is over, the battery is irrigated with acidic pH refining solutions (around pH =2) to dislodge the gold in aqueous chloride solution.

### b) ALTERNATIVE 2 (Using NaCl and NaCN)

It consists of using both reagents to generate a synergistic mixture to un-capsulate the gold trapped in the pyrite/arsenopyrite grains and simultaneously solubilize the gold. The procedure is as follows:
- SPLITTING: The ore is reduced to a size of 2.5 centimeters (if the oxidized ore contains a lot of clay, the size reduction should be done to 5 centimeters)
- AGGROMERATION: Before entering the agglomerator drum:
   - Solid lime is added directly from a hopper N 0 1 to the conveyor belt. The lime comes in powder form and is added between 0.5 and 5 k/ton, depending on the purity of the lime to ensure a basic pH > 11 when watering begins.
   - Immediately afterwards the solid NaCl reagent is added, directly to the same conveyor belt from a Hopper No. 2.
   - The dosage should be between 3 - 5 kg of NaCl per ton of ore. The NaCl should be granulated to size between 0.9 - 0.6 cm.
   - Thus, the conveyor belt contains ore, lime and NaCl reagent.
   - Then the solid NaCN reagent is added directly to the same conveyor belt from a Hopper No. 2.
   - The dosage will be between 2 - 3 kg of NaCN per ton of ore. The NaCN should be granulated to size between 0.3 - 0.9 cm.
   - When entering the agglomerator drum a perfect mixture of the solid reagents lime, NaCN and NaCl is achieved. Refining solutions are added to the interior of the agglomerator drum to reach the determined degree of wetting.
   - REST: At the drum exit, the formed glomerator is transported to the leaching pad. The glomer must rest for 15 to 20 days. During this period the reagent transforms the pyrite into a porous mineral and solubilizes the gold.
   - IRRIGATION: Once the resting period has elapsed, the pile is irrigated with medium-base refining solutions to dislodge the gold in aqueous solution.

c) ALTERNATIVE 3 (Using solid reagent and then cyanide leaching) Use the solid reagent only to disencapsulate the gold trapped in the pyrite/arsenopyrite grains and then leach in a conventional manner with cyanide solutions. Proceed as follows:
- SPLITTING: The ore is reduced to a size of 2.5 centimeters (if the oxidized ore contains a lot of clays, the size reduction should be done to 5 centimeters)
- AGGROMERATION: Before entering the agglomerator drum:
   - Solid lime is added directly from a #1 hopper to the conveyor belt. - The lime comes in powder form and is added between 0.5 and 5 k/ton, depending on the purity of the lime to ensure a basic pH > 11 when watering begins.
   - Immediately afterwards the solid NaCl reagent is added, directly to the same conveyor belt from a Hopper No. 2.
   - The dosage of NaCl should be between 3 - 5 kg of NaCl per ton of ore.
   - The NaCl should be granulated to size between 0.9 - 0.6 cm.
   - That way the conveyor belt contains ore, lime and NaCl reagent.
   - When entering the agglomerator drum, a perfect mixture of the solid reagents is achieved. Refining solutions are added to the interior of the agglomerator drum to achieve the determined degree of wetting.
   - REST: At the exit of the drum, the glomerates formed are transported to the leaching pad. The glomer must rest for 15 to 20 days. During this period the reagent transforms the pyrite into a porous mineral.
   - Watering: After the resting period, the pile is watered with refining solutions containing cyanide between 300 - 500 mg NaCN per liter - Immediately afterwards, the solid NaCl reagent is added, directly to the same conveyor belt from a Hopper N°2.
   - The dosage of NaCl should be between 3 - 5 kg of NaCl per ton of ore.
   - The NaCl should be granulated to size between 0.9 - 0.6 cm.
   - That way the conveyor belt contains ore, lime and NaCl reagent.
   - When entering the agglomerator drum, a perfect mixture of the solid reagents is achieved. Refining solutions are added to the interior of the agglomerator drum to achieve the determined degree of wetting.
   - REST: At the exit of the drum, the glomerates formed are transported to the leaching pad. The glomer must rest for 15 to 20 days. During this period the reagent transforms the pyrite into a porous mineral.
   - Watering: After the resting period, the pile is watered with refining solutions containing cyanide between 300 - 500 mg NaCN per liter of solution, to extract the gold in aqueous solution. This corresponds to a conventional cyanidation process.

The alternatives to be used are selected according to a trade-off between environmental, technical-economic and production aspects. The parameters (reagent dosage, rest time, % of wetting, etc) are indicated in ranges. The exact determination of their values must be obtained previously in the laboratory, based on standard experimental tests of agglomeration and washing.

## Claims

1. Method for extracting base and precious metals by means of a treatment conducive to the solubilization of their refractory matrices, characterised because, in the case of the Extraction of COPPER, it comprises the following steps:
• Crushing. The mineral (Cu2S, CuS, CuFeS2, Cu5 FeS4, FeS2, ZnS, mo2, PbS) containing the valuable metal to be extracted must be a particulate system, that is, it must be channeled or crushed to a particle size distribution between 2.5 and 5 centimeters, depending on the hardness of the rock and of its origin, ie, if it comes from a reservoir, concentrates, ripies, clogs or urban disfacts.
• Mixture. The solid active agent (Nacl) is added to the ore, since a solid active agent (Nacl) is added from a free falling hopper by means of a flow regulating sensor, thereby having both the mineral and the solid active agent having an equivalent granulometric distribution, thus generating a homogeneous mixture in the rotating agglomerating drum.
• Agglomerating. Water or refining is added to the homogeneous mixture of the mineral and the active solid agent, to form a glomer whose moisture can range from 5 to 8%, which in turn is deposited in a pad to form a cell.
• Resting. The cell thus formed must be standing for a length of between 20 and 60 days, so that as moisture is reduced, spintronic transfer is produced which is required at the atomic level to transform the refractory mineral into a highly soluble salt.
• Irrigation. After standing, the metal extraction of interest is extracted by aqueous washing, being this a watering system in units of liters per square meter/hour. The water used can be sweet, seawater, industrial or salt/semi salt. A rich solution in the valuable metal is thus obtained.

2. Method for extracting precious metals by means of a treatment conducive to the solubilization of their refractory matrices, characterized because in the case of the extraction of GOLD and PLATINUM L FREE in oxidized matrices, it uses NaCN and comprises the following steps:
• Crushing. The mineral is reduced to sizes of 2.5 cm. If the mineral contains much clay, the reduction in size must be done at 5 cm.
• Agglomerating. Before entering the agglomerating drum, lime (0.5 to 5 kg/ton) solid is added from a hopper directly to the conveyor belt, to ensure a basic pH >11. Immediately after, the solid reactant is added directly to the same belt containing the mineral and lime (1 to 2 Kg/ton per ton of mineral).
• Resting. At the exit of the agglomerating drum, the formed glomer is transported to the leach pad and must rest between 5 to 10 days.
• Irrigation. Once the resting period has elapsed, the cell is proceeding to spray with refining solutions to extract the gold in cyanide solution.

3. Method for extracting base metals and precious metals by means of a treatment conducive to the solubilization of their refractory matrices, characterised because, in the case of the extraction of FREE GOLD particles in oxidized matrices, nacl used and it comprises the following steps:
• Crushing. The mineral is reduced to sizes of 2.5 cm. If the mineral contains much clay, the reduction in size must be done at 5 cm.
• Agglomerating. Before entering the agglomerating drum, lime (0.5 to 5 kg/ton) solid is added from a hopper directly to the conveyor belt, to ensure a basic pH > 11. Immediately after, the solid Nacl reagent is added directly to the same belt containing the mineral and lime (2 to 3 kg Nacl per ton of mineral).
• Resting. At the exit of the agglomerating drum, the formed glomer is transported to the leach pad and must rest from 10 to 15 days
• Irrigation. Once the resting period has elapsed, the cell is proceeding to spray with refining solutions to extract the gold in chlorinated solution.

4. Method for extracting base and precious metals by a pre-treatment conducive to the solubilization of their refractory matrices, characterised because, in the case of the extraction of gold Particles encapsulated in sulfide grains (pyrite, arsenopyrite or other sulfide) contained in silicated Matrices, nacl is used comprising the following steps:
• Crushing. The mineral is reduced to a size of 2.5 cm. If the mineral contains excess clay, the size reduction should be made up to 5 cm.
• Agglomerating. Prior to entering the agglomerating drum, lime (0.5 to 5 kg/ton) solid is added from a hopper directly to the conveyor belt, to ensure a basic pH >11. Immediately after, the solid Nacl reagent is added, directly to the same belt containing the mineral and lime (5 to 10 kg Nacl per ton of ore). It must be granulated between 0.6 and 0.9 centimeters
• Resting. At the exit of the agglomerating drum, the formed glomer is transported to the leach pad and must rest between 20 to 30 days
• Irrigation. Once the resting period has elapsed, the cell is sprayed with refining solutions to extract the gold in the chlorinated solution.

5. Method for extracting base and precious metals by a pre-treatment conducive to the solubilization of their refractory matrices, characterised because, in the case of the extraction of gold Particles encapsulated in sulfide grains (pyrite, arsenopyrite or other sulfide) contained in silicated Matrices, nacl and NaCN are used, comprising the following steps:
• Crushing. The mineral is reduced to a size of 2.5 cm. If the mineral contains excess of clay, the size reduction should be made up to 5 cm.
• Agglomerating. Prior to entering the agglomerating drum, solid lime (0.5 to 5 kg/ton) is added from a hopper directly to the conveyor belt, to ensure a basic pH > 11. Immediately after the solid Nacl reagent is added, directly to the same belt containing the mineral and lime (3 to 5 kg Nacl per ton of ore). It must be granulated between 0.6 and 0.9 centimeters. TThen, the solid reactant Nacn (2 to 3 kg of NaCn per ton of mineral) is added, also directly to the conveyor belt, where the mineral, lime and NaCl are already present. At the exit of the agglomerating drum, the formed glomer is transported to the leach pad and must rest between 15 to 20 days.
• Irrigation. Once the resting period has elapsed, the cell is transferred with refining solutions to extract the gold in aqueous solution.

6. Method for extracting base and precious metals by a pre-treatment conducive to the solubilization of their refractory matrices, characterised because, in the case of the extraction of gold particles encapsulated in grains of sulfides (pyrite, arsenopyrite or other sulfide) contained in silicated matrices, uses solid agent NaCl only to deencapsulate the trapped gold in the sulfide grains and then leach in a conventional manner with NaCN cyanide solutions.

7. Method for extracting base and precious metals by means of a pre-treatment conducive to the solubilization of their refractory matrices, **characterised in that** the Extraction of COBALT and IRON, comprising the following steps:
• Crushing. The mineral (Carroite, Cobaltite, Spherocobaltite, heterogenite and variants, Wustite, hematite, Magnetite, Nichelite) containing the valuable metal to be extracted must be a particulate system, that is, it must be channeled or crushed to a particle size distribution between 2.5 and 5 centimeters, depending on the hardness of the rock and of its origin, ie, if it comes from a reservoir, concentrates, ripies, clogs or urban defacts.
• Mixture. The solid active agent (Nacl) is added to the mineral, since a solid active agent (Nacl) is added from a free falling hopper by means of a flow regulating sensor, thereby having both the mineral and the solid active agent, an equivalent granulometric distribution, thus generating a homogeneous mixture in the rotating agglomerating drum.
• Agglomerating. Water is added to the homogeneous mixture of the mineral and the active solid agent, to form a glomer whose moisture can range from 5 to 8%, which in turn is deposited in a pad to form a cell.
• Resting. The cell thus formed must be standing for a length of between 20 and 60 days, so that, as moisture is reduced, spintronic transfer is produced which is required at the atomic level to transform the refractory mineral into a highly soluble salt.
• Irrigating. After standing, the metal extraction of interest is extracted by aqueous washing, this is a watering system in units of liters per square meter/hour. The water used can be sweet, seawater, industrial or salt/semi salt. A rich solution in the valuable metal is thus obtained.

8. Method for extracting base and precious metals by means of a pre-treatment conducive to the solubilization of their refractory matrices, characterised because, in the case of the Extraction of Lithium (extendable to extract Na, K, B and Mg), comprises the following steps:
• Crushing. The mineral (Espoduore, Lepidoptera litiphyllite, petalite and variants) containing the valuable metal to be extracted must be a particulate system, that is, it must be grinded or crushed to a particle size distribution between 2.5 and 5 centimeters, depending on the hardness of the rock and of its origin, ie, if it comes from a reservoir, concentrates, ripies, clogs or urban disfacts.
• Mixture. The solid active agent (Nacl) is added to the mineral, since a solid active agent (Nacl) is added from a free falling hopper by means of a flow regulating sensor, thereby having both the mineral and the solid active agent an equivalent granulometric distribution, thus generating a homogeneous mixture in the rotating agglomerating drum.
• Agglomerating. Water or refining is added to the homogeneous mixture of the mineral and the active solid agent, to form a glomer whose moisture can range from 3 to 5%, which in turn is deposited in a pad to form a cell.
• Resting. The cell thus formed must be standing for a period of between 5 and 15 days, so that as moisture is reduced, spintronic transfer is produced which is required at the atomic level to transform the refractory mineral into a highly soluble salt.
• Irrigation. After standing, the metal extraction of interest is extracted by aqueous washing, this is a watering system in units of liters per square meter/hour. The water used can be sweet, seawater, industrial or salt/semi salt. A rich solution in the valuable metal is thus obtained.
